# FASCICULE DE BREVET EUROPEEN

(11) **EP 2 070 818 B1**
(45) Date de publication et mention de la délivrance du brevet: **28.07.2010**
(21) Numéro de dépôt: 08291191.8
(22) Date de dépôt: 15.12.2008
(51) Int. Cl.: B64C 25/44

(54) **Procédé d'alimentation en énergie d'actionneurs associés à un train d'atterrissage d'aéronef**
Verfahren zur Stromversorgung von Stellantrieben, die mit dem Fahrwerk eines Flugzeugs verbunden sind
Method of supplying power to actuators associated with an aircraft landing gear

(30) Priorité: 13.12.2007 FR 0708678
(43) Date de publication de la demande: 17.06.2009
(73) Titulaire: Messier-Bugatti, 78140 Velizy Villacoublay (FR)
(72) Inventeur: Frank, David, 75013 Paris (FR); Mehez, Jérôme, 91390 Morsang sur Orge (FR)
(74) Mandataire: Parzy, Benjamin Alain

(56) Documents cités:
- CA-A1- 2 479 482
- US-A- 2 400 587
- US-A- 2 569 670

## Description

L'invention concerne un procédé d'alimentation en énergie d'actionneurs associés à un train d'atterrissage d'aéronef.

### ARRIERE-PLAN DE L'INVENTION

Les aéronefs sont généralement pourvus d'un train d'atterrissage comportant plusieurs atterrisseurs, dont un atterrisseur auxiliaire et des atterrisseurs principaux, ces derniers étant équipés de freins. Divers actionneurs sont associés à ces atterrisseurs, parmi lesquels :
- des actionneurs de freinage montés sur l'atterrisseur au niveau des roues, pour assurer le freinage de l'aéronef. Il s'agit en général de freins hydrauliques ou de freins électromécaniques ;
- des actionneurs d'orientation, pour orienter les roues orientables portées par les divers atterrisseurs composant le train d'atterrissage, par exemple par l'atterrisseur auxiliaire, ou encore, sur certains aéronefs, par les atterrisseurs principaux ;
- des actionneurs de manoeuvre, pour provoquer la rétraction ou l'extension des atterrisseurs ainsi que des trappes ou portes associées. Ces actionneurs comportent à la fois des vérins de manoeuvre et des crochets de verrouillage pour retenir les atterrisseurs ou les trappes en position fermée.

Pour alimenter en énergie ces divers actionneurs, on utilise en général la génération principale de l'aéronef, située au niveau des moteurs de l'aéronef. Celle-ci peut comprendre des pompes hydrauliques ou des générateurs électriques directement actionnés par les moteurs de l'aéronef. Les pompes hydrauliques peuvent encore être entraînées par des moteurs électriques alimentés par les générateurs électriques de l'aéronef.

On connaît du document CA 2 479 482 un aéronef équipé de diverses générations d'énergie hydraulique : une génération principale comportant des pompes entraînées par des moteurs électriques, et situées au voisinage respectivement des deux atterrisseurs principaux et de l'atterrisseur auxiliaire, et une génération locale comportant deux pompes entraînées par les roues de l'atterrisseurs auxiliaire lorsque l'aéronef roule. La génération locale est utilisée en secours, si la génération principale venait à défaillir.

### OBJET DE L'INVENTION

L'invention a pour objet un nouveau procédé pour alimenter les actionneurs associés aux atterrisseurs composant le train d'atterrissage d'un aéronef.

### BREVE DESCRIPTION DE L'INVENTION

Selon l'invention, on propose un procédé d'alimentation en énergie d'actionneurs associés aux atterrisseurs formant le train d'atterrissage d'un aéronef, l'aéronef comportant :
- une génération d'énergie principale qui fonctionne indépendamment d'une rotation des roues portées par le train d'atterrissage ;
- une génération d'énergie locale comprenant au moins un générateur local entraîné par la rotation d'une roue portée par l'un des atterrisseurs ;
   le procédé de l'invention comprenant les étapes suivantes :
- dans un mode nominal de fonctionnement, alimenter lesdits actionneurs par la génération d'énergie locale ;
- et, dans un mode complémentaire de fonctionnement, lorsque la fourniture d'énergie par la génération d'énergie locale est insuffisante, assurer en complément ou totalement la fourniture d'énergie audits actionneurs au moyen de la génération d'énergie principale.

Ainsi, la génération d'énergie principale n'est utilisée selon l'invention qu'en complément de la génération d'énergie locale.

On diminue ainsi la demande d'énergie adressée à la génération d'énergie principale, ce qui permet d'en diminuer la taille, ce qui conduit à des gains de masse appréciables. En outre, on peut se contenter, s'agissant d'une génération d'énergie principale électrique et d'actionneurs électromécaniques, de faire descendre de la génération d'énergie principale vers ces actionneurs une ligne d'alimentation basse tension, suffisante pour fournir le complément d'énergie requis. On évite ainsi de descendre le long des atterrisseurs des câbles d'alimentation à haute tension, qui nécessitent des blindages et des protections importantes et qui nécessitent la mise en oeuvre de précautions particulières pour leur maintenance dans la mesure où ils sont susceptibles de transporter de fortes puissances.

De préférence, la génération d'énergie locale comprend des moyens de stockage d'énergie permettant un stockage d'énergie lorsque cette énergie n'est pas utilisée par les actionneurs ou lorsque la demande d'énergie des actionneurs est inférieure à l'énergie fournie par la génération d'énergie locale.

### BREVE DESCRIPTION DES DESSINS

L'invention sera mieux comprise à la lumière de la description qui suit en référence aux figures des dessins annexés parmi lesquelles :
- la figure 1 est un schéma d'une architecture hydraulique conforme à un premier mode de mise en oeuvre du procédé de l'invention, l'architecture visant ici l'alimentation de la commande d'orientation de l'atterrisseur auxiliaire ;
- la figure 2 est une vue en coupe schématique de l'installation d'une pompe dans une roue d'atterrisseur auxiliaire, formant une partie de la génération d'énergie locale de la figure 1 ;
- la figure 3 est une vue analogue à celle de la figure 2, montrant l'installation d'un générateur électrique dans une roue d'atterrisseur auxiliaire, formant une partie de la génération d'énergie locale selon une variante de mise en oeuvre du procédé ;
- la figure 4 est une vue en coupe schématique d'une roue d'atterrisseur équipée d'un frein électromécanique et d'un générateur électrique formant une partie de la génération locale ;
- la figure 5 est une vue de dessus schématique d'un balancier d'atterrisseur principal portant quatre roues freinées portant une génération locale selon l'invention ;
- la figure 6 est une vue de dessus schématique d'un aéronef avec deux atterrisseurs principaux et un atterrisseur auxiliaire, équipé d'une génération locale selon l'invention.

### DESCRIPTION DETAILLEE DE L'INVENTION

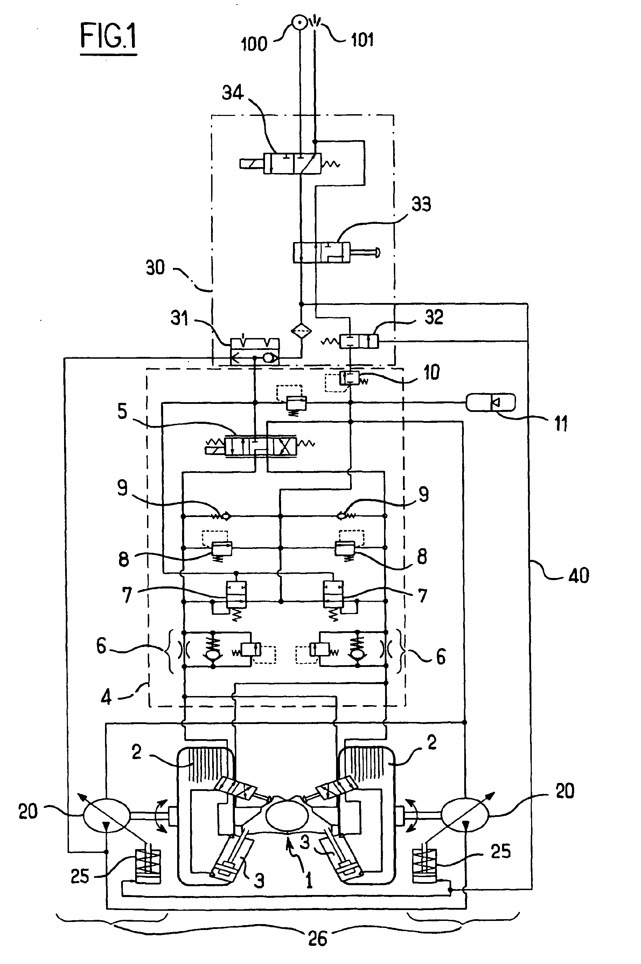

En référence à la figure 1, le procédé de l'invention est ici appliqué à l'alimentation d'une commande d'orientation portée par un atterrisseur auxiliaire 1 comportant deux roues 2 orientables selon l'axe longitudinal de l'atterrisseur, afin de diriger l'aéronef au sol. De façon connue en soi, la commande d'orientation comporte ici deux vérins 3 montés en « push-pull » et adaptés à faire tourner la partie orientable inférieure de l'atterrisseur auxiliaire 1. L'alimentation des vérins 3 se fait de façon très classique par l'intermédiaire d'un bloc hydraulique 4 (symbolisé en pointillés) qui comporte une servovalve 5 destinée à distribuer la pression dans l'une ou l'autre des chambres des vérins 3 en fonction d'une consigne d'orientation provenant d'un volant manoeuvré par le pilote, ou d'un ordre généré par l'ordinateur de bord de l'aéronef. Entre le bloc hydraulique 4 et les vérins 3 sont disposées des distributeurs rotatifs qui, en fonction de l'angle d'orientation de la partie orientable de l'atterrisseur auxiliaire 1, commutent les chambres des vérins 3 alimentées par le bloc hydraulique 4.

De façon connue en soi, le bloc hydraulique 4 comporte des clapets anti-shimmy 6, des clapets de court-circuit 7 pour mettre toutes les chambres des vérins 3 au retour lorsque le bloc hydraulique 4 n'est pas alimenté et ainsi permettre la libre orientation des roues 2, des clapets de surpression 9 pour éviter que les chambres des vérins ne soient détériorées lors d'une tentative d'orientation forcée des roues (par exemple par un tracteur de remorquage) alors que la commande d'orientation n'a pas été neutralisée, et enfin des clapets de gavage 9 pour remplir les chambres des vérins 3 qui viendraient sinon à caviter. A cet effet, la pression dans le bloc hydraulique est maintenue à un niveau supérieur à la pression de retour de l'aéronef par un clapet de tarage 10. Un accumulateur 11 absorbe les différences de débit entre les chambres des vérins 3 qui se remplissent et celles qui se vident, et assure le maintien de la pression dans le bloc hydraulique 4.

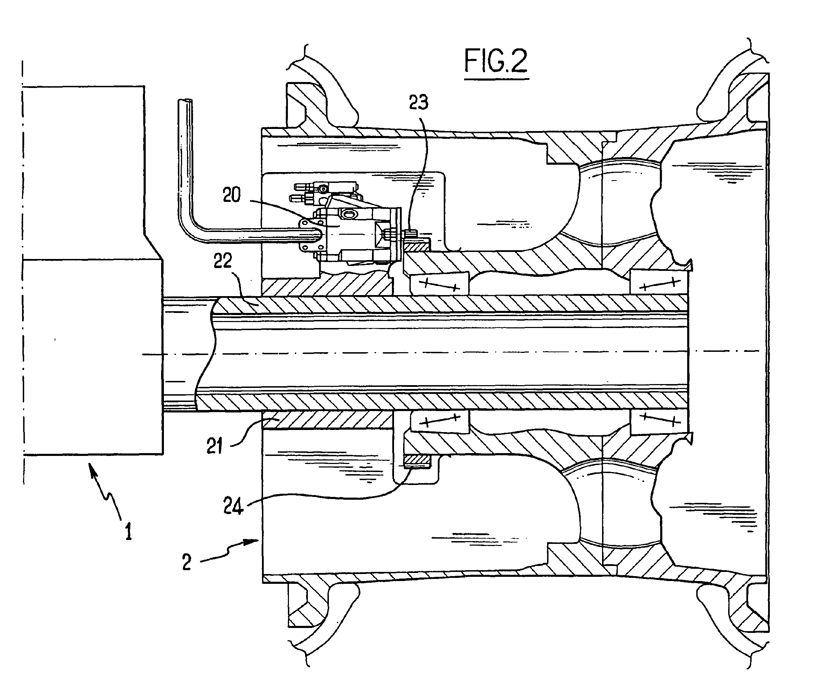

L'atterrisseur auxiliaire 1 est équipé d'une génération d'énergie locale 26 comportant ici deux pompes hydrauliques 20, chacune étant disposées dans l'une des roues 2 pour être entraînée par la roue associée lorsque celle-ci tourne. Ici, les pompes 20 sont à débit variable et génèrent donc de l'énergie sous la forme d'un débit commandé de fluide sous pression lorsque les roues tournent. Comme cela est plus visible à la figure 2, chacune des pompes 20 est montée sur un manchon 21 qui est enfilé sur l'essieu 22 qui reçoit la roue 2 le manchon 21 étant arrêté en rotation autour de l'essieu par des moyens d'arrêt non représentés. La pompe 20 comporte un arbre d'entraînement 23 dont l'extrémité dentée coopère avec une couronne dentée 24 montée sur le moyeu de la roue 2. Une rotation de la roue 2 lorsque l'aéronef se déplace sur l'aéroport provoque donc une rotation de l'arbre d'entraînement 23 de la pompe 20.

Il est avantageux de prévoir un moyen de protection qui permet d'éliminer les à-coups de pression susceptibles d'être générés par les pompes 20 lors de la mise en rotation des roues provoquées par l'atterrissage de l'aéronef. Par exemple, s'agissant de pompes à débit variable comme illustré ici, on ramènera le plateau de la pompe à la position de débit nul, pour progressivement le remettre en position de débit nominal après la mise en rotation des roues.

Revenant à la figure 1, on constate que les pompes 20 de la génération locale 26 sont connectées en parallèle et alimentent le bloc hydraulique 4 par l'intermédiaire d'un clapet navette 31. L'autre entrée du clapet navette 31 est connectée à une génération d'énergie principale 100 de l'aéronef, comportant des pompes entraînées par les moteurs de l'aéronef.

Le clapet navette 31 fait partie d'un ensemble de distribution 30 comportant :
- une vanne d'isolation 32 qui, lorsque le bloc hydraulique est alimenté par la génération locale, isole la ligne de retour du bloc hydraulique 4, de sorte que celui-ci est en circuit fermé avec la génération locale ;
- une vanne de coupure 33 commandée mécaniquement lors de la rétraction de l'atterrisseur auxiliaire pour mettre le bloc hydraulique 4 au retour lorsque l'atterrisseur auxiliaire est rétracté en soute ;
- une vanne de coupure 34 commandée électriquement pour mettre le bloc hydraulique 4 au retour tant que la commande d'orientation n'est pas activée, en particulier en vol avec l'atterrisseur déployé, ou au roulage à grande vitesse.

Le fonctionnement de l'ensemble est le suivant. Lors d'un mode de fonctionnement normal, alors que l'aéronef roule sur l'aéroport pour rejoindre l'aérogare ou pour rejoindre la piste de décollage, les roues 2 tournent, entraînant les pompes 20 de la génération d'énergie locale 26. Celles-ci débitent dans le bloc par l'intermédiaire du clapet navette 31. A cet effet, les plateaux des pompes 20 sont maintenus, par des vérins d'actionnement 25 comportant des ressorts, dans une position pour laquelle les pompes 20 ont un débit maximal. De la pression est alors disponible en provenance de la génération d'énergie locale pour permettre l'orientation des roues 2 et ainsi diriger l'aéronef. Quant au port de retour du bloc hydraulique d'orientation 4, il est fermé par la vanne d'isolation 32, de sorte que le fluide hydraulique n'a d'autre choix que de revenir vers les pompes 20. Le fluide tourne en circuit fermé.

Si l'une des pompes 20 venait à défaillir, l'autre pompe peut continuer à débiter. Le bloc hydraulique d'orientation 4 reçoit alors un débit divisé par deux, de sorte que l'orientation des roues peut continuer à être effectuée, moyennant une baisse de performance.

Si la deuxième pompe 20 venait à défaillir, ou si l'aéronef avait une vitesse de roulage trop faible pour que les pompes 20 aient un débit suffisant, alors, dans un mode complémentaire de fonctionnement, on utilise la pression et le débit provenant de la génération d'énergie principale 100 pour ici remplacer la fourniture de pression et débit par la génération locale.

Pour ce faire, on commande la vanne 34 pour qu'elle autorise la pression provenant de la génération d'énergie principale 100 à atteindre le clapet navette 31. Celui-ci commute en laissant la pression provenant de la génération principale 100 alimenter le bloc hydraulique 4 (la vanne 33 est ouverte du fait que l'atterrisseur auxiliaire est déployé). Une dérivation 40 permet à la fois de commander la vanne d'isolation 32 pour qu'elle mette le port de retour du bloc hydraulique 4 avec le retour de l'aéronef, et d'alimenter les actionneurs 25 qui forcent alors les plateaux des pompes 20 à revenir dans leur position de débit nul. Les pompes 20 de la génération locale 26 sont ainsi neutralisées. Le bloc hydraulique 4 n'est plus alimenté que par la génération hydraulique principale 100, et le port de retour du bloc hydraulique est connecté au retour 101 de l'aéronef.

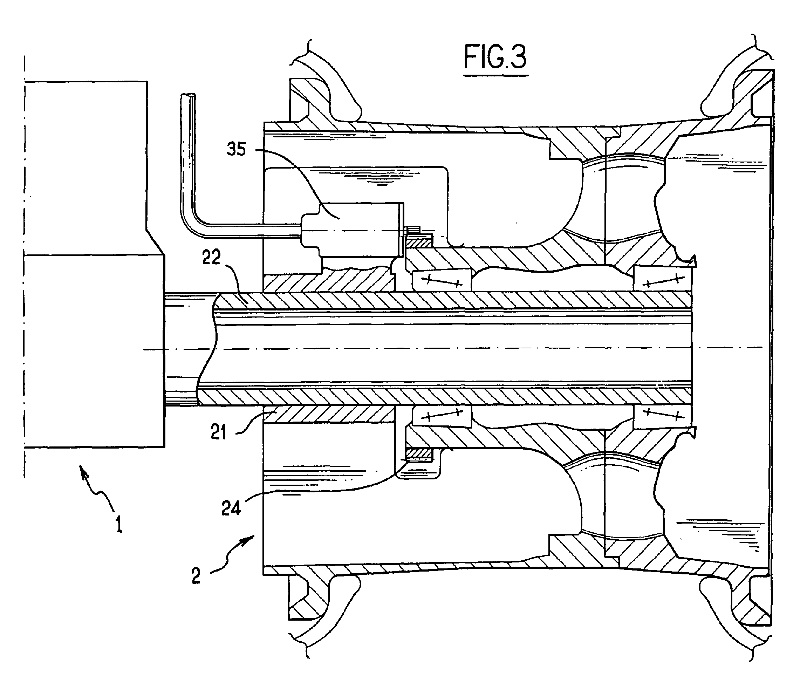

Selon une variante de mise en oeuvre illustrée à la figure 3, on peut, plutôt que d'installer des pompes dans les roues, y installer des générateurs électriques 35, qui sont reliés à une électropompe (non représentée) intégrée par exemple dans le bloc hydraulique 4. Ainsi, la génération locale comporte maintenant deux générateurs électriques 35 entraînés par les roues, et une électropompe dont le moteur électrique est alimenté par les générateurs électriques 35. Ainsi, lorsque les roues tournent, les générateurs électriques 35 débitent du courant grâce auquel le moteur électrique de l'électropompe tourne pour entraîner la pompe associée, fournissant ainsi la pression nécessaire au fonctionnement de la commande d'orientation hydraulique. De préférence, la génération locale ainsi constituée comporte une batterie tampon insérée entre les générateurs électriques 35 et l'électropompe pour stocker l'énergie électrique excédentaire générée par les générateurs électriques, et réguler la fourniture d'énergie à l'électropompe.

Ainsi, pour les périodes lors desquelles les générateurs électriques 35 débitent alors que l'orientation n'est pas sollicitée par le pilote, l'énergie électrique débitée est alors stockée dans la batterie tampon.

Ce n'est qu'en cas d'insuffisance de la charge de la batterie tampon, qui ne permettrait plus d'alimenter correctement le moteur de l'électropompe, que l'on commuterait grâce à l'ensemble de distribution 30 l'alimentation en pression du bloc hydraulique 4 vers la génération hydraulique principale 100.

En variante, on peut également, en cas d'insuffisance de la batterie tampon, relier l'électropompe directement à la génération électrique principale de l'aéronef qui fournirait alors l'électricité nécessaire pour faire tourner l'électropompe du bloc d'orientation, en remplacement de la génération électrique locale.

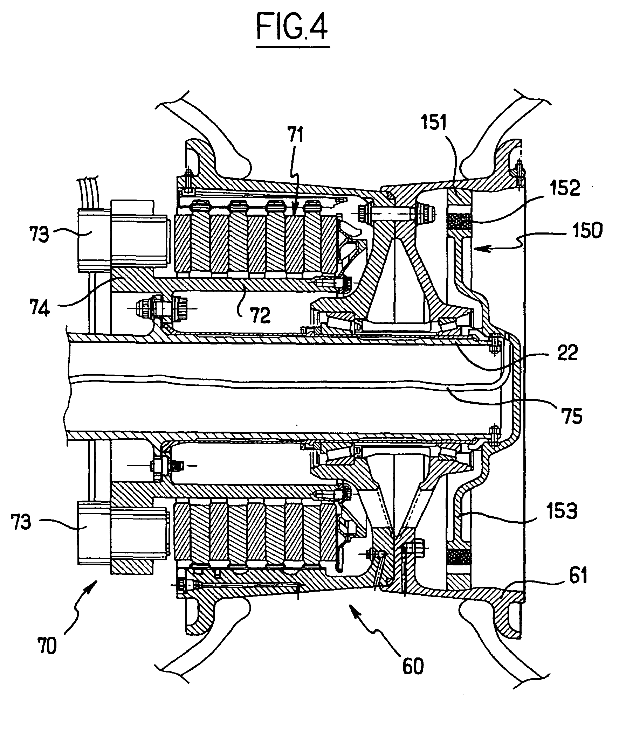

Selon maintenant un autre mode de mise en oeuvre de l'invention illustrée à la figure 4, la génération locale comprend maintenant des générateurs électriques 150 disposés dans les roues 60 des atterrisseurs principaux.

Dans l'exemple illustré, les roues 60 des atterrisseurs principaux sont ici freinées par des freins électromécaniques 70 comportant une pile de disques 71 avec des rotors qui tournent avec la jante 61 de la roue 60 et des stators qui sont bloqués en rotation par un tube de torsion 72. Les disques 71 sont pressés par des actionneurs électromécaniques 73 portés par une couronne 74 en regard des disques. Ici, la génération locale est utilisée pour alimenter les actionneurs des freins.

Les générateurs électriques 150 de la génération locale comportent d'une part un rotor 151 qui est solidaire de la jante 61 de la roue et qui comporte des aimants permanents, et d'autre part un stator bobiné 152, monté en périphérie d'un disque 153 solidaire de l'essieu. La rotation de la roue 60 provoque l'induction dans le stator bobiné 152 d'un courant électrique qui est collecté par un câble 75 s'étendant dans l'essieu.

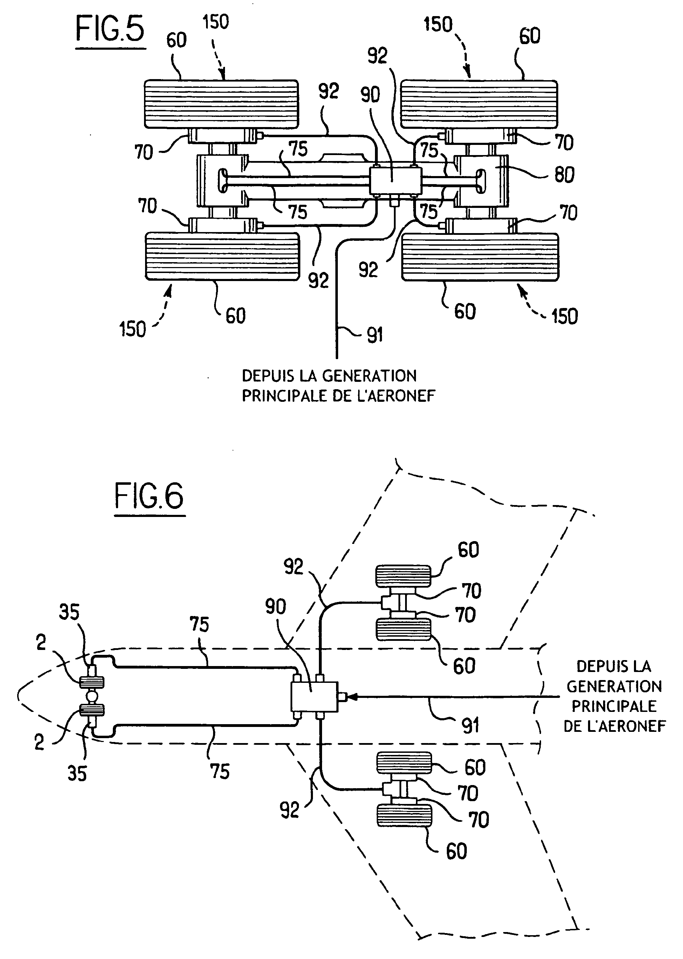

Plus précisément, et comme cela est visible à la figure 5 qui illustre un atterrisseur principal à quatre roues 60 équipées de freins électromécaniques 70 et portées par un balancier 80, les câbles 75 qui collectent le courant générés par les générateurs électriques 150 amènent le courant ainsi produit vers une centrale locale 90 qui intègre des moyens de redressement du courant ainsi produit, des moyens de stockage de courant tels qu'une batterie ou des capacités de stockage, et des moyens pour distribuer sélectivement le courant ainsi stocké vers les actionneurs électromécaniques des freins 70, par exemple des onduleurs commandés. Le courant est alors rapporté vers les actionneurs 73 des freins 70 par des câbles 92.

Ainsi, sur un même atterrisseur principal, les générateurs électriques locaux 150 font partie de la même génération électrique locale et sont donc mutualisés, de sorte que si l'un des générateurs électriques locaux 150 est défaillant, les autres continuent à débiter et ainsi assurer l'alimentation du frein monté sur la roue dont le générateur électrique est défaillant.

En variante, on pourra mutualiser les générateurs locaux de deux roues seulement et non plus des quatre roues, par exemple en mutualisant les générateurs locaux de deux roues portées par le même essieu, de sorte que le balancier comportera deux générations locales.

Par ailleurs, l'aéronef dispose toujours d'une génération électrique principale, comprenant des alternateurs entraînés par les moteurs de l'aéronef, ou, le cas échéant, par l'unité de puissance auxiliaire, et, en général, des batteries destinées à fournir de l'énergie électrique lorsque l'aéronef est à l'arrêt.

Ainsi, dans un mode de fonctionnement normal, les actionneurs électromécaniques de freinage 73 sont alimentés par la génération locale 90 associée. En pratique, l'énergie électrique est de préférence tirée des moyens de stockage de la génération locale 90, ceux-ci permettant à la fois de stocker le surplus d'énergie produit par les générateurs locaux 150 associés à la génération locale 150, et de réguler la fourniture d'énergie aux actionneurs électromécaniques de freinage 73. A défaut, si les moyens de stockage étaient entièrement vidés, le courant disponible pour les actionneurs électromécaniques de freinage 73, tout en transitant par les moyens de stockage, serait alors fourni à flux tendu par les générateurs locaux 150, le débit de courant dépendant dans ce cas de la vitesse de rotation des roues, et donc de la vitesse de déplacement de l'aéronef. Ce n'est alors qu'à très faible vitesse que les générateurs locaux 150 pourraient ne plus assurer un débit de courant suffisant pour satisfaire à la demande d'énergie des actionneurs électromécaniques 73. C'est dans cette circonstance que, selon l'invention, un complément d'énergie peut être demandé à la génération principale de l'aéronef. Cependant, compte tenu que l'aéronef roule alors à très petite vitesse, l'effort de freinage à développer reste faible, et ce complément d'énergie provenant de la génération principale reste lui-même faible en comparaison des puissances mises en jeu habituellement lors d'un freinage.

Ainsi, la liaison 91 entre la centrale locale et la génération principale destinée à apporter ce complément d'énergie peut être avantageusement choisie du type basse tension. Cette disposition évite de faire descendre le long des atterrisseurs des câbles à haute tension en provenance de la génération électrique principale, ce qui permet un gain de masse appréciable compensant au moins partiellement la masse de la génération locale, ce qui permet une installation facilitée sur l'atterrisseur, et ce qui évite les habituelles précautions relatives aux câbles à haute tension pouvant être manipulés ou approchés par le personnel au sol. Ainsi, les seuls câbles à haute tension présents sur l'atterrisseur sont les câbles 75 et 92, mais sont portés uniquement par le balancier 80, et non par la jambe de l'atterrisseur.

Ce complément d'énergie requis de la génération principale provient alors avantageusement des réseaux électrique basse tension de l'aéronef, alimentés par les alternateurs ou la batterie de la génération électrique principale.

Selon une variante de réalisation, on peut mutualiser le courant généré par les générateurs électriques locaux non pas seulement au niveau d'un atterrisseur, mais au niveau de l'ensemble du train d'atterrissage, ou une partie seulement de celui-ci, par exemple uniquement les atterrisseurs principaux. Cette mutualisation élargie augmente le taux de disponibilité des actionneurs alimentés par la génération locale. Cependant, cette disposition oblige à faire remonter le long des atterrisseurs concernés des câbles à haute tension.

On peut au contraire décider de se passer de tout mutualisation, et de faire alimenter chacun des freins 70 par le générateur local porté par la roue associée. La défaillance du générateur locale entraîne alors la perte du frein associé, ce qui peut être acceptable du point de vue de la sécurité et de la disponibilité de l'aéronef.

Selon maintenant un troisième mode de mise en oeuvre illustré à la figure 6, la génération locale 90 comporte maintenant des générateurs électriques locaux 35 implantés dans les roues de l'atterrisseur auxiliaire 1, et sert à alimenter les actionneurs électromécaniques des freins 70 équipant les roues 60 des atterrisseurs principaux. Le courant généré par les générateurs électriques locaux 35 est ramené vers la centrale locale 90 par les câbles 75 qui remontent le long de l'atterrisseur auxiliaire, pour être distribué vers les actionneurs de freinage par les câbles 92. La centrale locale 90 est reliée à la génération principale par un câble basse tension 91 en vue de recevoir le cas échéant de la génération principale un complément d'énergie. On utilisera avantageusement la centrale locale 90 pour alimenter les actionneurs d'orientation de l'atterrisseur auxiliaire.

L'invention n'est pas limitée à ce qui vient d'être décrit, mais bien au contraire englobe toute variante entrant dans le cadre défini par les revendications. En particulier, on pourra également alimenter les actionneurs de manoeuvre servant à l'extension et à la rétraction des atterrisseurs par la génération locale, si celle-ci est équipée de moyens de stockage d'énergie.

## Revendications

1. Procédé d'alimentation en énergie d'actionneurs (3;73) associés aux atterrisseurs formant le train d'atterrissage d'un aéronef, l'aéronef comportant :
- une génération d'énergie principale (100) qui fonctionne indépendamment d'une rotation des roues portées par le train d'atterrissage ;
- une génération d'énergie locale (26;90) comprenant un ou plusieurs générateurs locaux (20;35;150) entraînés chacun par la rotation d'une roue portée par l'un des atterrisseurs ;
le procédé de l'invention comprenant les étapes suivantes :
- dans un mode nominal de fonctionnement, alimenter lesdits actionneurs par la génération d'énergie locale ;
- et, dans un mode complémentaire de fonctionnement, lorsque la fourniture d'énergie par la génération d'énergie locale est insuffisante, assurer en complément ou totalement la fourniture d'énergie audits actionneurs au moyen de la génération d'énergie principale.

2. Procédé selon la revendication 1, dans lequel la génération locale d'énergie comporte des moyens de stockage d'énergie débitée par le ou les générateurs locaux, les moyens de stockage étant insérés entre le ou les générateurs locaux et les actionneurs pour former un tampon.

3. Procédé selon la revendication 1, appliqué à un aéronef comportant un atterrisseur auxiliaire à deux roues orientables (2,2), la génération locale comportant deux générateurs locaux (20,20;35,35) qui sont associés chacun à l'une des roues de l'atterrisseur auxiliaire, la génération locale étant utilisée pour alimenter en énergie des actionneurs (3,3) d'une commande d'orientation des roues de l'atterrisseur auxiliaire.

4. Procédé selon la revendication 1, appliqué à un aéronef comportant au moins un atterrisseur principal portant des roues avec des freins comportant des actionneurs de freinage (73), la génération locale comportant au moins un générateur local (150) associé à l'une des roues de l'atterrisseur principal, la génération locale étant utilisée pour alimenter au moins les actionneurs du frein de la roue concernée.

5. Procédé selon la revendication 4, dans lequel la génération locale comporte autant de générateurs (150) que de roues de l'atterrisseur principal, la génération locale comportant une centrale locale (90) à laquelle sont reliés les générateurs locaux, la centrale locale étant adaptée à distribuer l'énergie ainsi collectée vers les actionneurs des freins des roues de l'atterrisseur principal.

6. Procédé selon la revendication 5, dans lequel la centrale locale (90) comporte des moyens de stockage de l'énergie fournie par les générateurs locaux, ainsi que des moyens pour distribuer sélectivement l'énergie aux actionneurs de freinage.

7. Procédé selon la revendication 1, appliqué à un aéronef comportant un atterrisseur auxiliaire (2,2), la génération locale comportant deux générateurs locaux (35,35) qui sont associés chacun à l'une des roues de l'atterrisseur auxiliaire, la génération locale comportant une centrale locale (90) à laquelle sont reliés les générateurs locaux, la centrale locale étant adaptée à distribuer l'énergie ainsi collectée vers les actionneurs des freins (70) des roues (60) des atterrisseurs principaux de l'aéronef.

## Claims

1. A method of feeding energy to actuators (3; 73) associated with the undercarriages forming the landing gear of an aircraft, the aircraft comprising:
· a main power supply (100) that operates independently of rotation of wheels carried by the landing gear; and
· a local power supply (26; 90) comprising one or more local generators (20; 35; 150), each driven by rotation of a wheel carried by an undercarriage;
the method of the invention comprising the following steps:
· in a nominal mode of operation, powering said actuators by the local power supply; and
· in an additional mode of operation, when the delivery of energy by the local power supply is not sufficient, providing additional energy or all of the energy required by said actuators by means of the main power supply.

2. A method according to claim 1, wherein the local power supply includes means for storing the energy delivered by the local generator(s), the storage means being inserted between the local generator(s) and the actuators so as to form a buffer.

3. A method according to claim 1, applied to an aircraft having a nose undercarriage with two steerable wheels (2, 2), the local power supply comprising two local generators (20, 20; 35, 35), each associated with a respective one of the wheels of the nose undercarriage, the local power supply being used for powering actuators (3, 3) for controlling steering of the wheels of the nose undercarriage.

4. A method according to claim 1, applied to an aircraft having at least one main undercarriage carrying wheels with brakes including braking actuators (73), the local power supply comprising at least one local generator (150) associated with one of the wheels of the main undercarriage, the local power supply being used for powering at least the brake actuators of the wheel concerned.

5. A method according to claim 4, wherein the local power supply includes as many generators (150) as the main undercarriage has wheels, the local power supply comprising a local unit (90) to which the local generators are connected, the local unit being adapted to distribute the energy collected in this way to the brake actuators of the wheels of the main undercarriage.

6. A method according to claim 5, wherein the local unit (90) has means for storing the energy delivered by the local generators, and means for selectively distributing energy to the braking actuators.

7. A method according to claim 1, applied to an aircraft having a nose undercarriage (2, 2), the local power supply comprising two local generators (35, 35) each associated with a respective one of the wheels of the nose undercarriage, the local power supply comprising a local unit (90) to which the local generators are connected, the local unit being adapted to deliver the energy as collected in this way to the brake actuators (70) of the wheels (60) of the main undercarriages of the aircraft.

## Patentansprüche

1. Verfahren zur Energieversorgung von Aktuatoren (3; 73), die mit Fahrwerken verbunden sind, die die Fahrwerksanlage eines Flugzeugs bilden, wobei das Flugzeug umfasst:
- eine Hauptenergieerzeugung (100), die unabhängig von einer Drehung der von der Fahrwerksanlage getragenen Räder arbeitet,
- eine lokale Energieerzeugung (26; 90), die ein oder mehrere lokale Generatoren (20; 35; 150) umfasst, die jeweils durch die Drehung eines von einem der Fahrwerke getragenen Rades angetrieben werden, wobei das Verfahren der Erfindung die folgenden Schritte umfasst:
- Speisen der genannten Aktuatoren durch die lokale Energieerzeugung in einer Nennbetriebsart,
- und in einer komplementären Betriebsart, wenn die Energielieferung durch die lokale Energieerzeugung unzureichend ist, Sicherstellen der Energielieferung zu den genannten Aktuatoren ergänzend oder vollständig mit Hilfe der Hauptenergieerzeugung.

2. Verfahren nach Anspruch 1, wobei die lokale Energieerzeugung Speichermittel zum Speichern von Energie umfasst, die von dem bzw. den lokalen Generatoren geliefert wird, wobei die Speichermittel zwischen dem bzw. den lokalen Generatoren und den Aktuatoren eingefügt sind, um einen Puffer zu bilden.

3. Verfahren nach Anspruch 1, angewandt bei einem Flugzeug, das ein Hilfsfahrwerk mit zwei lenkbaren Rädern (2, 2) umfasst, wobei die lokale Erzeugung zwei lokale Generatoren (20, 20; 35, 35) umfasst, die jeweils mit einem der Räder des Hilfsfahrwerks verbunden sind, wobei die lokale Erzeugung dazu verwendet wird, Aktuatoren (3, 3) einer Steuerung zum Lenken der Räder des Hilfsfahrwerks mit Energie zu versorgen.

4. Verfahren nach Anspruch 1, angewandt bei einem Flugzeug, das mindestens ein Hauptfahrwerk umfasst, das Räder mit Bremsen trägt, die Bremsaktuatoren (73) umfassen, wobei die lokale Erzeugung mindestens einen lokalen Generator (150) umfasst, der mit einem der Räder des Hauptfahrwerks verbunden ist, wobei die lokale Erzeugung dazu verwendet wird, mindestens die Aktuatoren der Bremse des betreffenden Rades zu speisen.

5. Verfahren nach Anspruch 4, wobei die lokale Erzeugung so viele Generatoren (150) wie Räder des Hauptfahrwerks umfasst, wobei die lokale Erzeugung eine lokale Zentrale (90) umfasst, mit der die lokalen Generatoren verbunden sind, wobei die lokale Zentrale dazu geeignet ist, die so gesammelte Energie an die Aktuatoren der Bremsen der Räder des Hauptfahrwerks zu verteilen.

6. Verfahren nach Anspruch 5, wobei die lokale Zentrale (90) Mittel zum Speichern der von den lokalen Generatoren gelieferten Energie umfasst, sowie Mittel zum selektiven Verteilen der Energie an die Bremsaktuatoren.

7. Verfahren nach Anspruch 1, angewandt bei einem Flugzeug, das ein Hilfsfahrwerk (2, 2) umfasst, wobei die lokale Erzeugung zwei lokale Generatoren (35, 35) umfasst, die jeweils mit einem der Räder des Hilfsfahrwerks verbunden sind, wobei die lokale Erzeugung eine lokale Zentrale (90) umfasst, mit der die lokalen Generatoren verbunden sind, wobei die lokale Zentrale dazu geeignet ist, die so gesammelte Energie an die Aktuatoren der Bremse (70) der Räder (60) der Hauptfahrwerke des Flugzeugs zu verteilen.
